# EUROPÄISCHE PATENTSCHRIFT

(11) **EP 1 929 160 B1**
(45) Veröffentlichungstag und Bekanntmachung des Hinweises auf die Patenterteilung: **14.09.2011**
(21) Anmeldenummer: 06762578.0
(22) Anmeldetag: 14.07.2006
(51) Int. Cl.: F16B 5/02, F16B 37/04

(54) **BEFESTIGUNGSKLAMMER**
FASTENING CLAMP
BRIDE DE FIXATION

(30) Priorität: 23.09.2005 DE 102005045723
(43) Veröffentlichungstag der Anmeldung: 11.06.2008
(73) Patentinhaber: A. RAYMOND ET CIE, 38000 Grenoble (FR)
(72) Erfinder: DE GELIS, Vincent, F-38170 Seyssinet Pariset (FR)
(74) Vertreter: Rüttgers, Joachim
(86) Internationale Anmeldenummer: PCT/EP2006/006887
(87) Internationale Veröffentlichungsnummer: WO 2007/036253

(56) Entgegenhaltungen:
- DE-A1- 4 228 511
- DE-A1- 10 153 569
- FR-A- 2 762 882

## Beschreibung

Die Erfindung betrifft eine Befestigungsklammer gemäß dem Oberbegriff des Patentanspruches 1.

Eine derartige Befestigungsklammer ist aus FR 2 762 882 A1 bekannt. Die vorbekannte Befestigungsklammer zum Verbinden eines Trägerteiles und eines Anbauteiles verfügt über einen Durchsteckschenkel, der eine Durchsteckhülse aufweist, durch die eine Schraube durchführbar ist, und über einen dem Durchsteckschenkel gegenüberliegend angeordneten Gewindeschenkel, der über ein Filmscharnier mit einer dem Durchsteckschenkel gegenüberliegenden Anlageplatte verbunden ist, die eine sich in Richtung des Durchsteckschenkels erstreckende Distanzhülse trägt. An den Gewindeschenkel ist eine Gewindeeinheit angeformt, die von dem Durchsteckschenkel wegweisend ausgerichtet und in die eine Schraube einschraubbar ist. Die Durchsteckhülse erstreckt sich von dem Gewindeschenkel wegweisend und weist eine Wirkbauhöhe auf, die größer als die Dicke eines Anbauteiles ist. Weiterhin sind Eingriffselemente ausgebildet, und der Durchsteckschenkel sowie der Gewindeschenkel weisen in einer verhältnismäßig weit aufgespreizten Anordnung der Befestigungsklammer vor Herstellen der Verbindung einen Abstand auf, der so groß ist, dass ein Trägerteil im Wesentlichen eingriffsfrei mit den Eingriffselementen zwischen dem Durchsteckschenkel und dem Gewindeschenkel positionierbar ist, so dass nach Einschrauben einer Schraube in eine Endstellung die Eingriffselemente derart mit dem Trägerteil in Eingriff sind, dass die Befestigungsklammer unverschiebbar mit dem Trägerteil verbunden ist.

Aus DE 42 28 511 A1 ist eine Befestigungsklammer bekannt, die zum Verbinden eines Trägerteiles sowie eines Anbauteiles dient und über einen Durchsteckschenkel verfügt, der eine Durchsteckhülse aufweist. Durch die Durchsteckhülse ist eine Schraube durchführbar. Weiterhin ist ein Gewindeschenkel vorhanden, der dem Durchsteckschenkel gegenüberliegend angeordnet und mit einer Gewindeeinheit verbunden ist. In die Gewindeeinheit ist die Schraube einschraubbar. Bei der vorbekannten Befestigungsklammer ist auch an dem Gewindeschenkel eine Durchsteckhülse ausgebildet, wobei sich die Durchsteckhülsen von den einander zu gewandten Seiten des Durchsteckschenkels beziehungsweise des Gewindeschenkels auf einander zu erstrecken. Die Gesamthöhe der Durchsteckhülsen ist dabei größer als die Dicke des Trägerteiles, auf die die Befestigungsklammer aufgesteckt werden soll. An dem Durchsteckschenkel und an dem Gewindeschenkel sind Federlappen ausgebildet, die sich bei bestimmungsgemäßer Anordnung der Befestigungsklammer an dem Trägerteil an der betreffenden Seite des Trägerteiles abstützen. Dadurch kann die Schraube zum Bereitstellen einer sicheren Verklemmung genügend stark angezogen werden und andererseits ist das Ausdehnungsverhalten durch die Schraubverbindung nicht beeinträchtigt. Allerdings ist bei dieser vorbekannten Befestigungsklammer keine Justagemöglichkeit gegeben.

Aus DE 101 53 569 A1 ist eine Befestigungsklammer zum Verbinden von Platten mit unterschiedlichem Ausdehnungsverhalten bekannt, die eine an einer rechteckigen Basisplatte angeformte Gewindehülse aufweist. Diese Befestigungsklammer ist in ein Langloch eines Trägerteiles einklemmbar und in dessen Längsrichtung verschiebbar, wobei die Gewindehülse durch das Langloch durchgreift. Ein Anbauteil ist mit dem Trägerteil dadurch verbindbar, dass es an der der Gewindehülse gegenüberliegenden Seite der Basisplatte angelegt und mit einer mit der Gewindehülse in Eingriff kommende Schraube befestigt wird. Somit ist das Anbauteil in Längsrichtung des Langloches verschiebbar. Allerdings ist die Position der Befestigungsklammer in einer Richtung quer zu der Längsrichtung des Langloches festgelegt.

Der Erfindung liegt die Aufgabe zugrunde, eine Befestigungsklammer der eingangs genannten Art anzugeben, die sich durch eine geringe Bauhöhe auszeichnet und sich bereits beim Aufstecken auf ein relativ dickes Trägerteil verhältnismäßig einfach montieren lässt.

Diese Aufgabe wird bei einer Befestigungsklammer der eingangs genannten Art erfindungsgemäß mit den kennzeichnenden Merkmalen des Patentanspruches 1 gelöst.

Durch das Ausbilden der Eingriffselemente an der dem Durchsteckschenkel zugewandten Seite des Gewindeschenkels und von Seitenrippen an gegenüberliegenden Randseiten des Gewindeschenkels, die von dem Durchsteckschenkel wegweisend ausgerichtet sind, lässt sich die erfindungsgemäße Befestigungsklammer bei einer geringen Bauhöhe unproblematisch ohne aufwändiges vorangehendes Aufspreizen auch auf ein relativ dickes Trägerteil aufschieben.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Befestigungsklammer,
- Fig. 2: einen Schnitt in Querrichtung durch die Befestigungsklammer gemäß Fig. 1,
- Fig. 3: Draufsichten auf ein Trägerteil und ein Anbauteil, die mit einer erfindungsgemäßen Befestigungsklammer zu verbinden sind, und
- Fig. 4: einen Schnitt in Längsrichtung durch das Ausführungsbeispiel gemäß Fig. 1 mit einem in die Befestigungsklammer eingefügten Trägerteil und mit einem auf die Befestigungsklammer aufgelegten Anbauteil.

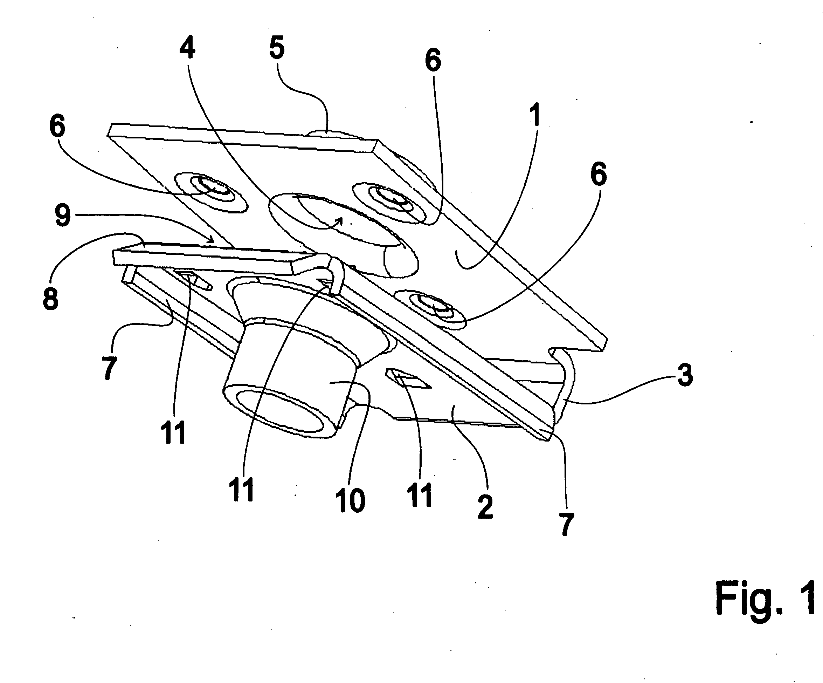

Fig. 1 zeigt in einer perspektivischen Ansicht ein Ausführungsbeispiel einer erfindungsgemäßen Befestigungsklammer, die einen im Wesentlichen rechteckigen, flachen Durchsteckschenkel 1 und einen gegenüberliegend dem Durchsteckschenkel angeordneten, ebenfalls rechteckigen Gewindeschenkel 2 aufweist. Der Durchsteckschenkel 1 und der Gewindeschenkel 2 sind über einen an den schmalen Randseiten angesetzten Verbindungsabschnitt 3 miteinander verbunden.

Der Durchsteckschenkel 1 weist eine Durchsteckausnehmung 4 auf, an deren Randbereich eine sich von dem Durchsteckschenkel 1 wegweisend erstreckende Durchsteckhülse 5 angesetzt ist. Um die Durchsteckhülse 5 herum sind in den Durchsteckschenkel 1 eine Anzahl von Erhebungen 6 eingeprägt, die sich über die von dem Gewindeschenkel 2 wegweisende Seite des Durchsteckschenkels 1 erheben.

Der Gewindeschenkel 2 weist zur Versteifung an seinen längeren Randseiten von dem Durchsteckschenkel 1 wegweisend im Wesentlichen rechtwinklig umgebogene Seitenrippen 7 auf. An der dem Verbindungsabschnitt 3 gegenüberliegenden kurzen Randseite ist der Gewindeschenkel 2 mit einer von dem Durchsteckschenkel 1 schräg wegweisend umgebogenen Einführzunge 8 ausgebildet.

Der Durchsteckausnehmung 4 gegenüberliegend weist der Gewindeschenkel 2 eine in der Darstellung gemäß Fig. 1 nicht sichtbare Durchführausnehmung 9 auf, entlang deren Randbereich eine von dem Durchsteckschenkel 1 wegweisend ausgerichtete Gewindehülse 10 als Gewindeeinheit mit einem eingeformten Innengewinde angesetzt ist. Um die Gewindehülse 10 herum sind als Eingriffselemente durch Ausstanzen in Richtung des Durchsteckschenkels 1 ausgerichtete Krallzungen 11 ausgebildet.

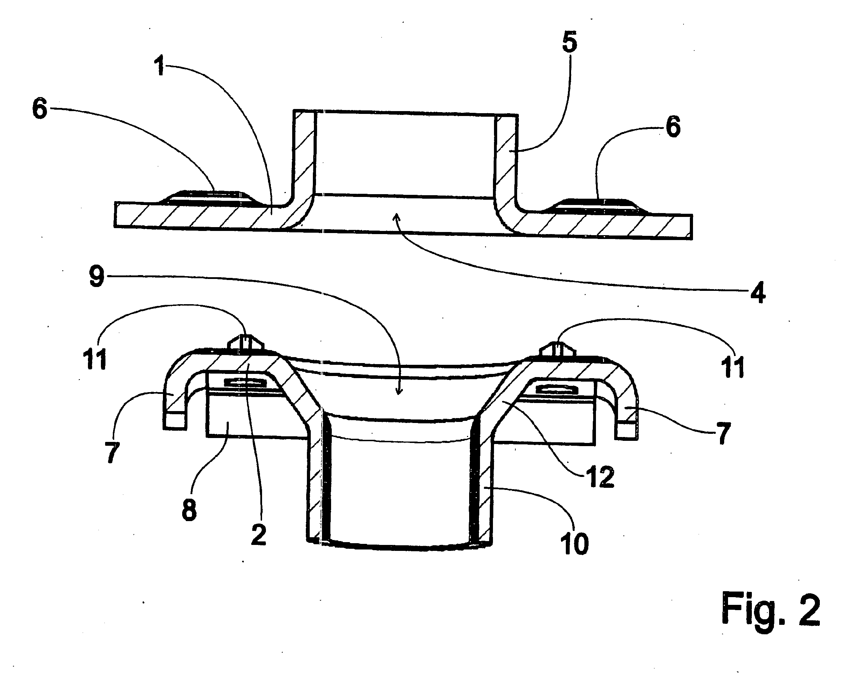

Fig. 2 zeigt die in Fig. 1 dargestellte erfindungsgemäße Befestigungsklammer in einem Schnitt parallel zu den kürzeren Randseiten des Durchsteckschenkels 1 beziehungsweise des Gewindeschenkels 2 im Bereich der Durchsteckhülse 5 beziehungsweise der Gewindehülse 10 mit von dem Verbindungsabschnitt 3 wegweisender Blickrichtung. Aus Fig. 2 ist ersichtlich, dass der Innendurchmesser der Durchsteckhülse 5 größer als der Innendurchmesser der Gewindehülse 10 ist und dass die Gewindehülse 10 über einen sich von der Gewindehülse 10 zu dem Gewindeschenkel 2 erweiternden Konusabschnitt 12 mit dem Gewindeschenkel 2 verbunden ist. Dadurch ist eine verhältnismäßig einfache Durchführung einer in Fig. 2 nicht dargestellten Schraube durch die Durchsteckhülse 5 in die Gewindehülse 10 geschaffen, wobei der Konusabschnitt 12 auch zu einer günstigen Krafteinleitung bei Anziehen der Schraube zum Vermeiden von Verformungen führt.

Weiterhin lässt sich Fig. 2 entnehmen, dass die Erhebungen 6 gegenüber der Gesamtbauhöhe der Durchsteckhülse 5 geringfügig über die von dem Gewindeschenkel 2 abgewandte Seite des Durchsteckschenkels 1 überstehen und damit eine weiter unten näher erläuterte Wirkbauhöhe der Durchsteckhülse 5 nur geringfügig verringern.

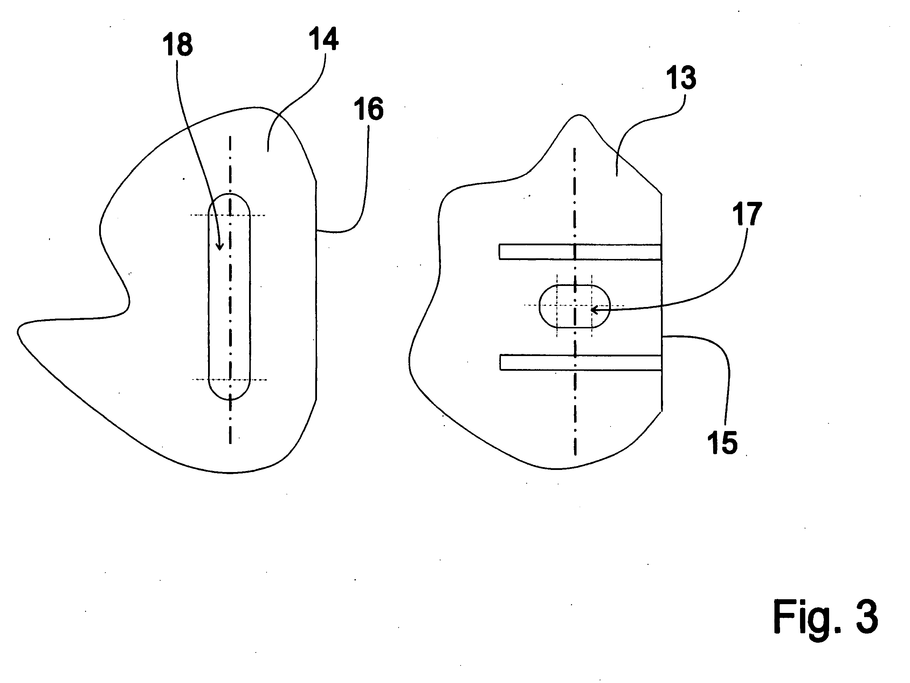

Fig. 3 zeigt ein Trägerteil 13 und ein Anbauteil 14, die mit der vorangehend erläuterten erfindungsgemäßen Befestigungsklammer zu verbinden sind, wobei in Fig. 3 lediglich die für das Bewerkstelligen der Verbindung relevanten Bereiche dargestellt sind. Das Trägerteil 13 sowie das Anbauteil 14 weisen hier jeweils eine gerade Randkante 15, 16 auf, die nach Verbindung des Trägerteiles 13 und des Anbauteiles 14 bündig zueinander liegen sollen. Hierfür ist das Trägerteil 13 mit einer länglichen Trägerteilausnehmung 17 ausgebildet, deren Längsrichtung rechtwinklig zu der Randkante 15 des Trägerteiles 13 ausgerichtet ist und die eine Breite aufweist, die größer als der Außendurchmesser der Gewindehülse 10 ist. Die Trägerteilausnehmung 17 endet in einem Abstand von der Randkante 15 des Trägerteiles 13.

Das Anbauteil 14 verfügt über eine längliche Anbauteilausnehmung 18, deren Längsachse parallel zu der Randkante 16 des Anbauteiles 14 ausgerichtet ist. Die Längsachse der Anbauteilausnehmung 18 liegt bei in etwa fluchtender Anordnung der Randkanten 15, 16 in der Mitte der Trägerteilausnehmung 17.

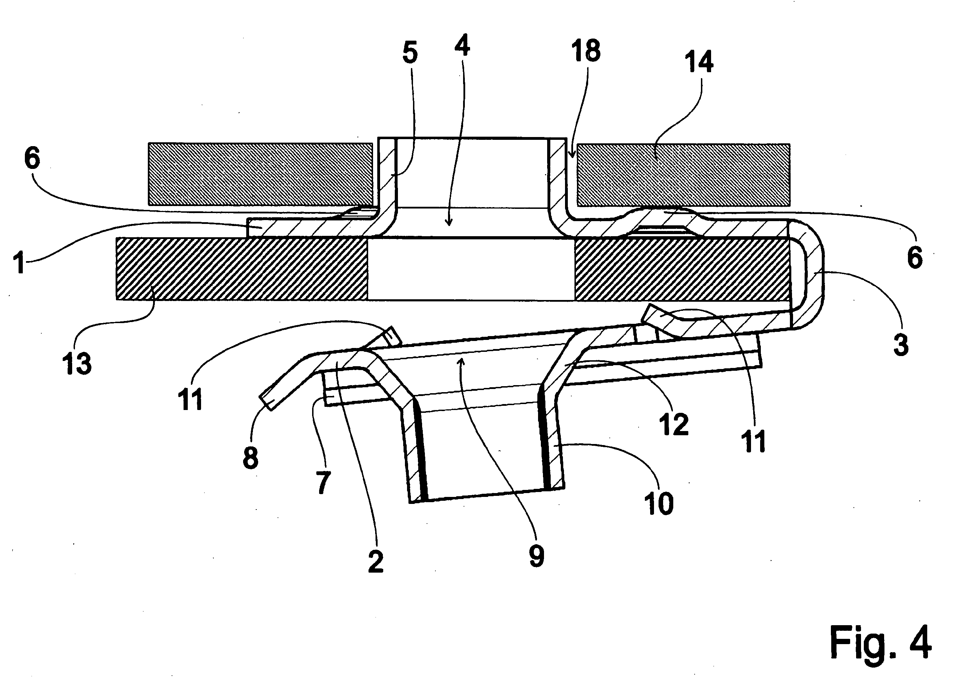

Fig. 4 zeigt die vorangehend erläuterte erfindungsgemäße Befestigungsklammer mit einem zwischen den Durchsteckschenkel 1 und den Gewindeschenkel 2 eingefügten Trägerteil 13 sowie einem auf die Erhebungen 6 aufgelegten Anbauteil 14 vor Einführen einer Schraube durch die Durchsteckhülse 5 zum Einschrauben in die Gewindehülse 10. Aus Fig. 4 ist ersichtlich, dass durch eine aufgebogene V-artige Stellung des Durchsteckschenkels 1 und des Gewindeschenkels 2 ein so ausreichend großer Abstand geschaffen ist, der es gestattet, dass die Befestigungsklammer ungehindert ohne Eingriff der Krallzungen 11 auf das Trägerteil 13 aufsteckbar ist. In der Anordnung gemäß Fig. 4 lässt sich die Befestigungsklammer nach Eingriff der Schraube mit der Gewindehülse 10 noch vor einem festlegenden Eingriff der Krallzungen 11 mit dem Trägerteil 13 in Bezug auf das Trägerteil 13 zum Einnehmen einer Endstellung fein justieren, wobei nach Anziehen der Schraube und vollständigem Eingriff der Krallzungen 11 mit dem Trägerteil 13 die Befestigungsklammer in der Endstellung festgelegt ist.

Nach Herstellen der festlegenden Schraubverbindung liegt der Kopf der Schraube beziehungsweise eine zwischen dem Kopf der Schraube und ihrem Gewindeabschnitt eingelegte Beilagscheibe auf dem von dem Gewindeschenkel 2 wegweisenden Rand der Durchsteckhülse 5 auf. Durch Einrichten der sich aus dem Abstand zwischen dem von dem Gewindeschenkel 2 wegweisenden Rand der Durchsteckhülse 5 und der Kontaktebene mit den Erhebungen 6 beziehungsweise bei Fehlen derselben der von dem Gewindeschenkel 2 abgewandten Seite des Durchsteckschenkels 1 festgelegten Wirkbauhöhe der Durchsteckhülse 5 derart, dass sie größer als die Dicke des Anbauteiles 14 ist, lässt sich das Anbauteil 14 zum Toleranzausgleich zum einen in Längsrichtung der Anbauteilausnehmung 18 und zum anderen auch geringfügig zwischen der dem Durchsteckschenkel 1 zugewandten Seite der Schraube beziehungsweise der Beilagscheibe und der Oberseite der Erhebungen 6 bewegen. Durch den verhältnismäßig kleinflächigen Kontakt des Anbauteiles 14 mit den Erhebungen 6 ist dabei eine verhältnismäßig geringe Reibung zwischen der Befestigungsklammer und dem Anbauteil 14 erreicht.

## Patentansprüche

1. Befestigungsklammer zum Verbinden eines Trägerteiles (13) und eines Anbauteiles (14) mit einem Durchsteckschenkel (1), der eine Durchsteckhülse (5) aufweist, durch die eine Schraube durchführbar ist, und mit einem dem Durchsteckschenkel (1) gegenüberliegend angeordneten Gewindeschenkel (2), an den eine Gewindeeinheit (10) angeformt ist, die von dem Durchsteckschenkel (1) wegweisend ausgerichtet und in die eine Schraube einschraubbar ist, wobei sich die Durchsteckhülse (5) von dem Gewindeschenkel (2) wegweisend erstreckt sowie eine Wirkbauhöhe aufweist, die größer als die Dicke eines Anbauteiles (14) ist, wobei Eingriffselemente (11) vorhanden sind und wobei der Durchsteckschenkel (1) sowie der Gewindeschenkel (2) in einer Anordnung der Befestigungsklammer vor Herstellen der Verbindung einen Abstand aufweisen, der so groß ist, dass ein Trägerteil (13) im Wesentlichen eingriffsfrei mit den Eingriffselementen (11) zwischen dem Durchsteckschenkel (1) und dem Gewindeschenkel (2) positionierbar ist, so dass nach Einschrauben einer Schraube in eine Endstellung die Eingriffselemente (11) derart mit dem Trägerteil (13) in Eingriff sind, dass die Befestigungsklammer unverschiebbar mit dem Trägerteil (13) verbunden ist, wobei der Durchsteckschenkel (1) und der Gewindeschenkel (2) über einen an den Randseiten des Durchsteckschenkels (1) und des Gewindeschenkels (2) angesetzten Verbindungsabschnitt (3) miteinander verbunden sind, **dadurch gekennzeichnet, dass** die Eingriffselemente (11) an der dem Durchsteckschenkel (1) zugewandten Seite des Gewindeschenkels (2) und an gegenüberliegenden Randseiten des Gewindeschenkels (2) Seitenrippen (7) ausgebildet sind, die von dem Durchsteckschenkel (1) wegweisend ausgerichtet sind.

2. Befestigungsklammer nach Anspruch 1, **dadurch gekennzeichnet, dass** die Eingriffselemente als ausgestanzte Krallzungen (11) ausgebildet sind.

3. Befestigungsklammer nach Anspruch 1 oder Anspruch 2, **dadurch gekennzeichnet, dass** an dem Durchsteckschenkel (1) Erhebungen (6) ausgebildet sind, die sich über die von dem Gewindeschenkel (2) abgewandte Seite des Durchsteckschenkels (1) erstrecken.

4. Befestigungsklammer nach einem der Ansprüche 1 bis 3, **dadurch gekennzeichnet, dass** die Gewindehülse (10) über einen Konusabschnitt (12) mit dem Gewindeschenkel (2) verbunden ist.

## Claims

1. Fixing bracket for connecting a support part (13) and an attachment part (14), with an insertion arm (1) which possesses an insertion sleeve (5) through which a screw can be passed, and with a threaded arm (2) arranged opposite the insertion arm (1) on which a threaded unit (10) is formed, pointing away from the insertion arm (1), and into which a screw can be screwed, whereby the insertion sleeve (5) extends away from the threaded arm (2) and has an effective construction height which is greater than the thickness of an attachment part (14), whereby engaging elements (11) are provided and whereby, in an arrangement of the fixing bracket before the connection is made, the insertion arm (1) and the threaded arm (2) are spaced at a distance which is so great that a support part (13) can be positioned between the insertion arm (1) and the threaded arm (2), essentially without engaging with the engaging elements (11), so that after a screw has been screwed into an end position the engaging elements (11) engage with the support part (13) in such a way that the fixing bracket is connected immovably with the support part (13), whereby the insertion arm (1) and the threaded arm (2) are connected together via a connecting section (3) arranged on the edge sides of the insertion arm (1) and of the threaded arm (2), **characterised in that** the engaging elements (11) are formed on the side of the threaded arm (2) facing the insertion arm (1) and lateral ribs (7) which point away from the insertion arm (1) are formed on opposite edge sides of the threaded arm (2).

2. Fixing bracket according to claim 1, **characterised in that** the engaging elements are formed as punched-out claw tongues (11).

3. Fixing bracket according to claim 1 or claim 2, **characterised in that** raised sections (6) are formed on the insertion arm (1) which extend above the side of the insertion arm (1) facing away from the threaded arm (2).

4. Fixing bracket according to one of the claims 1 to 3, **characterised in that** the threaded sleeve (10) is connected with the threaded arm (2) via a conical section (12).

## Revendications

1. Agrafe de fixation pour l'assemblage d'un élément faisant office de support (13) avec un élément rapporté (14) comprenant une patte d'insertion (1) qui est munie d'une douille de passage (5) au travers de laquelle une vis peut être introduite et comprenant une patte formant filetage (2) disposée opposée à la patte d'insertion (1), dans laquelle une amorce de filetage (10) est réalisée solidaire par formage, qui est orientée vers l'extérieur par rapport à la patte d'insertion (1) et dans laquelle une vis est destinée à être vissée, la douille de passage (5) s'étendant en l'occurrence vers l'extérieur par rapport à la patte formant filetage (2) et ayant une hauteur efficace installée qui est supérieure à l'épaisseur d'un élément rapporté (14), agrafe dans laquelle il est prévu des organes de mise en prise d'accrochage (11) et dans laquelle la patte d'insertion (1) ainsi que la patte formant filetage (2) présentent, dans un agencement de l'agrafe de fixation, avant la réalisation de la liaison d'assemblage, un intervalle d'écartement qui est dimensionné dans une proportion telle qu'un élément faisant office de support (13) peut être substantiellement positionné, sans qu'intervienne de mise en prise d'encastrement niveau des organes de mise en prise d'accrochage (11), entre la patte d'insertion (1) et la patte formant filetage (2), ce qui fait qu'après le vissage d'une vis à fond de course les organes de mise en prise d'accrochage (11) se trouvent en prise d'engagement avec l'élément faisant office de support (13), la patte d'insertion (1) et la patte formant filetage (2) étant en l'occurrence reliées ensemble par une portion de liaison (3) attenante aux portions de rive respectives de la patte d'insertion (1) et de la patte formant filetage (2), **caractérisée en ce que** les organes de mise en prise d'accrochage (11) sont disposés sur le côté de la patte formant filetage (2) orienté vers la patte d'insertion (1) et **en ce qu'**au niveau des bords latéraux opposés de la patte formant filetage (2) il est prévu des nervures latérales (7) qui sont orientées en s'étendant vers l'extérieur par rapport à la patte d'insertion (1).

2. Agrafe de fixation selon la revendication 1, **caractérisée en ce que** les organes de mise en prise d'accrochage réciproque se présentent sous la forme de languettes de cramponnement (11) qui sont réalisées par découpage à la presse.

3. Agrafe de fixation selon la revendication 1 ou la revendication 2, **caractérisée en ce que** la patte d'insertion (1) est munie de protubérances (6) qui s'étendent au-dessus du côté de la patte d'insertion (1) qui est orienté à l'opposé de la patte formant filetage (2).

4. Agrafe de fixation selon l'une des revendications 1 à 3, **caractérisée en ce que** la douille filetée (10) est raccordée à la patte formant filetage (2) par l'intermédiaire d'une portion en forme de tronc de cône (12).
